# EUROPEAN PATENT APPLICATION

(11) **EP 4 145 877 A1**
(43) Date of publication of application: **08.03.2023**
(21) Application number: 21796973.2
(22) Date of filing: 19.04.2021
(51) Int. Cl.: H04W 8/22, H04W 24/10

(54) **TERMINAL, WIRELESS COMMUNICATION METHOD, AND BASE STATION**

(30) Priority: 30.04.2020 JP 2020080376
(71) Applicant: NTT DOCOMO, INC., Chiyoda-Ku Tokyo 100-6150 (JP)
(72) Inventor: MATSUMURA, Yuki, Tokyo 100-6150 (JP); TAKAHASHI, Hideaki, Tokyo 100-6150 (JP); NAGATA, Satoshi, Tokyo 100-6150 (JP)
(74) Representative: Hoffmann Eitle
(86) International application number: PCT/JP2021/015805
(87) International publication number: WO 2021/220856

(57) **Abstract**

In order to appropriately perform reporting of UE capability information, a terminal according to one aspect of the present disclosure includes a receiving section that receives terminal capability enquiry information including at least one of information related to a maximum number of transmission ports per resource, information related to a maximum number of resources, and information related to a total number of transmission ports, and a control section that, when reporting a combination of the maximum number of transmission ports per resource, the maximum number of resources, and the total number of transmission ports as terminal capability, controls to perform reporting of the combination in a case that at least one of the maximum number of transmission ports per resource, the maximum number of resources, and the total number of transmission ports is less than a value notified by the enquiry information.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15 NR, reporting of UE capability information from a UE to a network is supported, the UE capability information being related to resources/ports for a channel state information (CSI) reference signal (e.g., a CSI-RS).

For example, the UE reports information related to the number of CSI-RS resources/the number of CSI-RS ports per band and information related to the number of CSI-RS resources/the number of CSI-RS ports per combination of a plurality of bands (band combination (BC)) as the UE capability information. The network (e.g., a base station) controls a configuration of a CSI-RS resource/port on the basis of the information (or parameter) reported from the UE.

On the other hand, reduction of overhead of the UE capability information reported from the UE is expected. In this case, it is conceivable that the reported UE capability information is limited, but how to control the reported UE capability information has not been fully studied.

Thus, an object of the present disclosure is to provide a terminal, a radio communication method, and a base station that can appropriately perform reporting of UE capability information. Solution to Problem

A terminal according to one aspect of the present disclosure includes a receiving section that receives terminal capability enquiry information including at least one of information related to a maximum number of transmission ports per resource, information related to a maximum number of resources, and information related to a total number of transmission ports, and a control section that, when reporting a combination of the maximum number of transmission ports per resource, the maximum number of resources, and the total number of transmission ports as terminal capability, controls to perform reporting of the combination in a case that at least one of the maximum number of transmission ports per resource, the maximum number of resources, and the total number of transmission ports is less than a value notified by the enquiry information.

### Advantageous Effects of Invention

According to one aspect of the present disclosure, it is possible to appropriately perform reporting of UE capability information.

### Brief Description of Drawings

FIG. 1 is a diagram to show an example of communication control related to UE capability information between a UE and a network;
FIG. 2 is a diagram to show an example of a parameter related to a CSI-RS reported by a UE per band;
FIG. 3 is a diagram to show an example of a parameter related to a CSI-RS reported by a UE per BC;
FIG. 4 is a diagram to show an example of an active period of a CSI-RS;
FIG. 5 is a diagram to show an example of configurations of a CSI-RS resource/port for band A/band B;
FIGS. 6A and 6B are diagrams to show an example of reporting of the number of CSI-RS resources/the number of CSI-RS ports;
FIG. 7 is a diagram to show an example of contents of UE-CapabilityRequestFilter notified by a network to a UE;
FIG. 8 is a diagram to show an example of a case where UE capability information is reported on the basis of UE capability enquiry notified from a network;
FIG. 9 is a diagram to show an example of control of reporting of UE capability information according to a first aspect;
FIG. 10 is a diagram to show another example of the control of reporting of UE capability information according to the first aspect;
FIG. 11 is a diagram to show another example of the control of reporting of UE capability information according to the first aspect;
FIG. 12 is a diagram to show an example of a schematic structure of a radio communication system according to one embodiment;
FIG. 13 is a diagram to show an example of a structure of a base station according to one embodiment;
FIG. 14 is a diagram to show an example of a structure of a user terminal according to one embodiment; and
FIG. 15 is a diagram to show an example of a hardware structure of the base station and the user terminal according to one embodiment.

### Description of Embodiments

### (UE Capability Information Report (UE capability report))

In a radio communication system, a terminal (also referred to as a user terminal, User Equipment (UE), and so on) reports, to a network (e.g., a base station or operator), capability information of the terminal itself with respect to each function used for communication. UE capability information reported for each function is reported in various units, such as per UE, per band, per band combination (per BC), and per band in band combination (per band in BC).

A network controls radio communication with each UE (e.g., transmission/reception) on the basis of capability information reported from the UE. On the other hand, even when UE capability information (e.g., UE capability information for an unused band or the like) unused by the radio communication system is reported to the network from the UE, the network fails to use the reported UE capability information, thus resulting in unnecessary reported information.

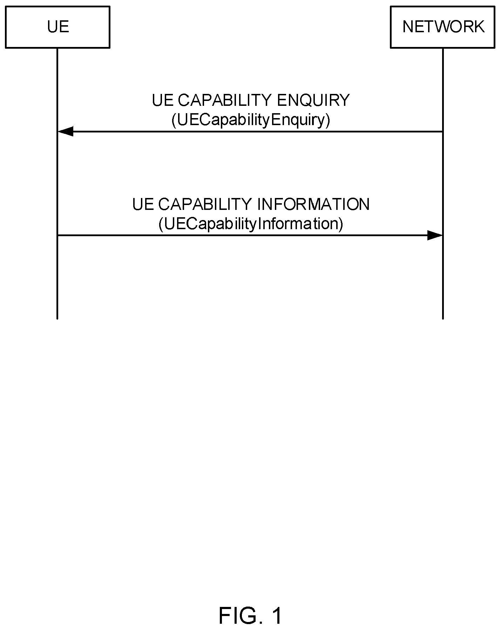

Therefore, the network may notify the UE of information related to a communication condition (e.g., a band to be supported or the like) used/supported by the network (or communication system used by the network) before the UE reports UE capability information of its own terminal (see FIG. 1). The UE may judge, on the basis of the information notified from the network, contents/values of UE capability information (e.g., UECapabilityInformation) reported to the network.

The information notified from the network to the UE may be referred to as UE capability enquiry/UE capability enquiry (e.g., UECapabilityEnquiry) or a UE capability request filter (e.g., UE-CapabilityRequestFilter) .

In other words, the network may notify the UE of information related to UE capability requiring reporting (e.g., a parameter or parameter range) or information related to UE capability not requiring reporting (e.g., a parameter or parameter range) beforehand.

UE capability enquiry (e.g., UECapabilityEnquiry) information may be included in a certain message transmitted from the network to the UE. The certain message may be DL-DCCH-Message. The UE capability enquiry information may include information with which the network requests the UE to filter UE capability (e.g., capabilityRequestFilter or UE-CapabilityRequestFilterNR). The information for requesting filtering of the UE capability may include information (e.g., CodebookParameterFilter) related to a filter for a codebook parameter corresponding to channel state information (CSI).

For example, the UE may report, as the UE capability information, information related to a CSI report.

### (CSI Report (CSI report or reporting))

In Rel-15 NR, a terminal (also referred to as a user terminal, User Equipment (UE), and so on) generates (also referred to as determines, calculates, estimates, measures, and so on) channel state information (CSI) on the basis of a reference signal (RS) (or resource for the RS), and transmits (also referred to as reports, feeds back, and so on) the generated CSI to a network (e.g., a base station). For example, the CSI may be transmitted to the base station with use of an uplink control channel (e.g., a Physical Uplink Control Channel (PUCCH)) or an uplink shared channel (e.g., a Physical Uplink Shared Channel (PUSCH)).

The RS used for generation of the CSI may be, for example, at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like.

The CSI-RS may include at least one of a non-zero power (Non Zero Power (NZP)) CSI-RS and CSI-Interference Management (CSI-IM). The SS/PBCH block is a block including an SS and PBCH (and corresponding DMRS), and may be referred to as an SS block (SSB) and so on. The SS may include at least one of a primary synchronization signal (PSS) and a secondary synchronization signal (SSS).

The CSI may include at least one parameter (CSI parameter) such as a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal-to-Noise and Interference Ratio or Signal to Interference plus Noise Ratio), and an L1-SNR (Signal to Noise Ratio).

The UE may receive information related to a CSI report (report configuration information) to control the CSI report on the basis of the report configuration information. The report configuration information may be, for example, a radio resource control (RRC) information element (IE) "CSI-ReportConfig." Note that in the present disclosure, the RRC IE may be expressed in other words with an RRC parameter, a higher layer parameter, and the like.

The report configuration information (e.g., the RRC IE "CSI-ReportConfig") may include, for example, at least one of the following.
- Information related to CSI report type (report type information, for example, RRC IE "reportConfigType")
- Information related to one or more quantities of CSI to be reported (one or more CSI parameters) (report quantity information, for example, RRC IE "reportQuantity")
- Information related to RS resource used for generation of the quantities (the CSI parameters) (resource information, for example, RRC IE "CSI-ResourceConfigId")
- Information related to target frequency domain for CSI report (frequency domain information, for example, RRC IE "reportFreqConfiguration")

For example, the report type information may indicate a periodic CSI (P-CSI) report, an aperiodic CSI (A-CSI) report, or a semi-permanent (semi-persistent) CSI (Semi-Persistent CSI (SP-CSI)) report.

The report quantity information may specify at least one combination of the above-described CSI parameters (e.g., the CRI, RI, PMI, CQI, LI, L1-RSRP, and the like).

The resource information may be an ID of an RS resource. The RS resource may include, for example, a non-zero power CSI-RS resource or SSB and a CSI-IM resource (e.g., a zero power CSI-RS resource).

The UE performs channel estimation by using a received RS to estimate a channel matrix H. The UE feeds back an index (PMI) determined on the basis of the estimated channel matrix.

The PMI may indicate a precoder matrix (also simply referred to as a precoder) considered by the UE to be appropriate for use in downlink (DL) transmission to the UE. Each value of the PMI may correspond to one precoder matrix. A set of PMI values may correspond to a set of different precoder matrices referred to as a precoder codebook (also simply referred to as a codebook).

The CSI report may include CSI of one or more types in a space domain. For example, the CSI may include at least one of a first type (type 1 CSI) used for selection of a single beam and a second type (type 2 CSI) used for selection of multiple beams. The single beam may be expressed in other words with a single layer, and the multiple beams may be expressed in other words with a plurality of beams. The type 1 CSI may not assume multi-user multiple input multiple output (MIMO), and the type 2 CSI may assume the multi-user MIMO.

The above-described codebook may include a codebook for the type 1 CSI (also referred to as a type 1 codebook and so on) and a codebook for the type 2 CSI (also referred to as a type 2 codebook and so on). The type 1 CSI may include type 1 single panel CSI and type 1 multi-panel CSI, for which different codebooks (type 1 single panel codebook and type 1 multi-panel codebook) may be defined, respectively.

In the present disclosure, type 1 and type I may be interchangeably interpreted. In the present disclosure, type 2 and type II may be interchangeably interpreted.

An uplink control information (UCI) type may include at least one of Hybrid Automatic Repeat reQuest ACKnowledgement (HARQ-ACK), a scheduling request (SR), and CSI. The UCI may be delivered on a PUCCH, or may be delivered on a PUSCH.

The UE may report a list of supported CSI-RS resources for each CSI codebook type. For example, the UE reports information related to a maximum number of transmission ports per resource, a maximum number of resources per band, and a total number of transmission ports per band (e.g., {maxNumberTxPortsPerResource, maxNumberResourcesPerBand, totalNumberTxPortsPerBand}).

The maximum number of transmission ports per resource (maxNumberTxPortsPerResource) indicates a maximum number of transmission ports in the resource (e.g., a maximum number of transmission ports capable of being simultaneously configured in the CSI-RS resource). The maximum number of resources per band (maxNumberResourcesPerBand) indicates a maximum number of resources in all CCs (or cells) in the band (e.g., a maximum number of CSI-RS resources capable of being simultaneously configured across all CCs). The total number of transmission ports per band (totalNumberTxPortsPerBand) indicates a total number of transmission ports in all CCs in the band (e.g., a total number of transmission ports capable of being simultaneously configured across all CCs). Note that the CCs correspond to CCs included in the band.

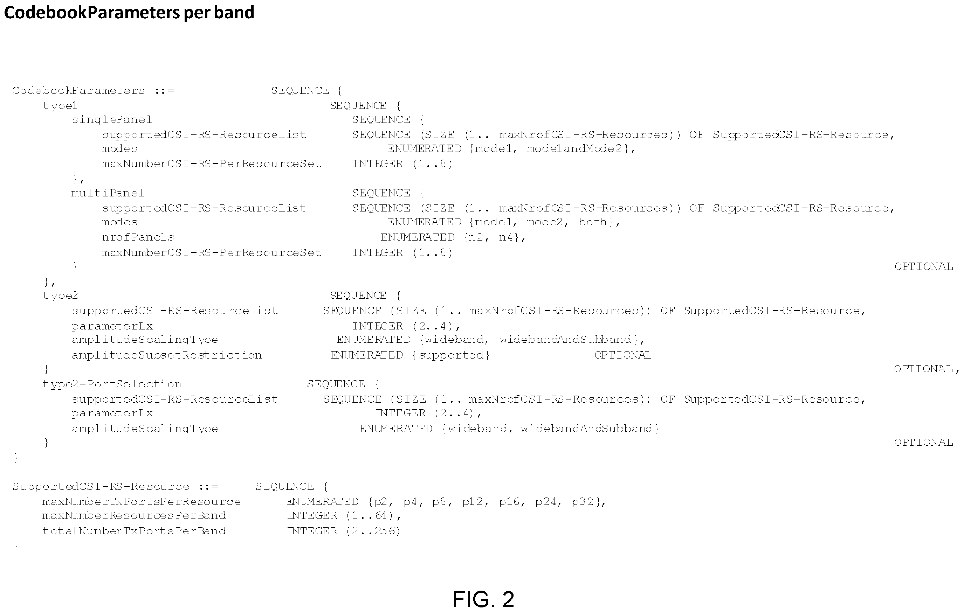

The UE may report codebook parameters related to a codebook (e.g., codebookParameters) as band parameters per band (e.g., BandNR parameters). The codebook parameters may indicate parameters corresponding to a codebook supported by the UE. The codebook parameters may include at least one of the following parameters (1) to (4) (FIG. 2). For example, (1) may be mandatory, and (2) to (4) may be optional.

(1) Parameter for type 1 single panel coadbook (type1 singlePanel) supported by UE
(2) Parameter for type 1 multi-panel codebook (type1 multiPanel) supported by UE
(3) Parameter for type 2 codebook (type2) supported by UE
(4) Parameter for type 2 codebook (type2-PortSelection) with port selection supported by UE

Each parameter of (1) to (4) may include information (supportedCSI-RS-ResourceList) related to a list of CSI-RS resources supported by the UE. The information related to the list of the CSI-RS resources may include a list of the following parameters mentioned above.
- Maximum number of transmission ports per resource

### (maxNumberTxPortsPerResource)

- Maximum number of resources per band (maxNumberResourcesPerBand)
- Total number of transmission ports per band

### (totalNumberTxPortsPerBand)

The parameters (1) to (4) related to the above-described codebooks reported by the UE may be referred to as FG2-36/2-40/2-41/2-43. The parameters {first parameter (e.g., maxNumberTxPortsPerResource), second parameter (e.g., maxNumberResourcesPerBand), third parameter (e.g., totalNumberTxPortsPerBand)} included in the list of the CSI-RS resources may be referred to as triplets (e.g., Triplets). The triplets may be interpreted as a combination of parameters (or elements) included in the list of the CSI-RS resources.

The UE to support a combination of a plurality of bands may report a certain parameter (e.g., UE capability information) for each combination of bands. The combination of bands may be referred to as a band combination (BC).

The certain parameter (e.g., CA-ParametersNR or csi-RS-IM-ReceptionForFeedbackPerBandComb) may include a parameter (e.g., maxNumberSimultaneousNZP-CSI-RS-ActBWP-AllCC) corresponding to a maximum number of CSI-RS resources in all CCs/active BWP and a parameter (e.g., totalNumberPortsSimultaneousNZP-CSI-RS-ActBWP-AllCC) corresponding to a total number of ports for CSI-RS resources in all CCs/active BWP.

The parameter (e.g., maxNumberSimultaneousNZP-CSI-RS-ActBWP-AllCC) corresponding to a maximum number of CSI-RS resources in all CCs/active BWP indicates a maximum number of CSI-RS resources simultaneously configured across all CCs in an active BWP. This parameter limits a total number of CSI-RS resources capable of being configured by a NW across all CCs. The NW may apply this limit in addition to a limit notified by a maximum number of CSI-RS resources per CC (e.g., maxNumberSimultaneousNZP-CSI-RS-PerCC).

The parameter (e.g., totalNumberPortsSimultaneousNZP-CSI-RS-ActBWP-AllCC) corresponding to a total number of ports for CSI-RS resources in all CCs/active BWP indicates a total number of ports for CSI-RS resources simultaneously configured across all CCs in an active BWP. This parameter limits a total number of ports capable of being configured by the NW across all CCs. The NW may apply this limit in addition to a limit notified by a total number of ports for CSI-RS resources per CC (e.g., totalNumberPortsSimultaneousNZP-CSI-RS-PerCC) .

The certain parameter related to the band combination (BC) reported by the UE (or certain parameter reported per BC) may be referred to as FG2-33.

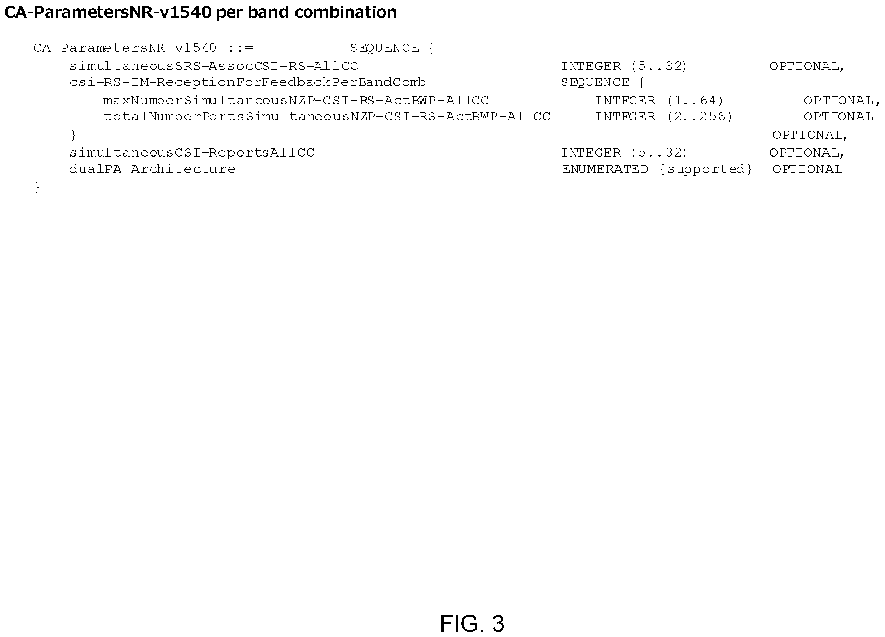

The UE may report the parameters (e.g., CodebookParameters)/triplets related to the codebook per band (see FIG. 2), and may report the certain parameter (e.g., CA-ParametersNR) per BC (see FIG. 3).

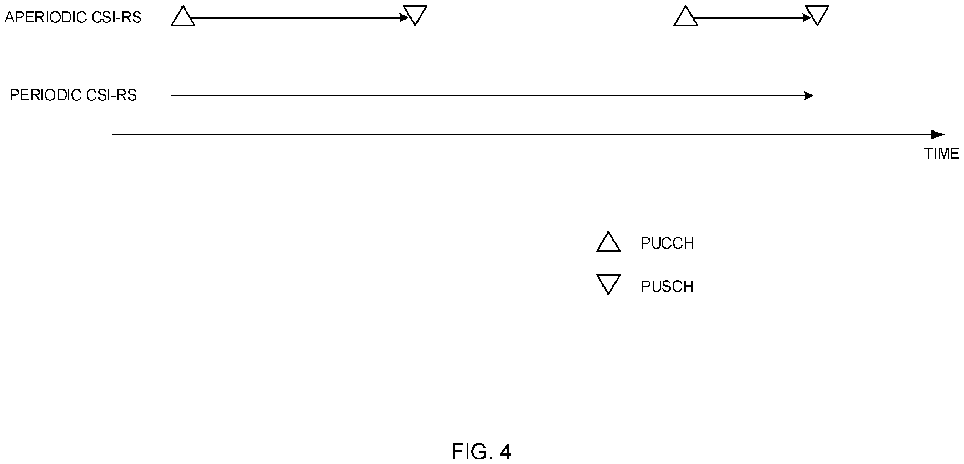

In CSI processing criteria, the UE may not assume that any slot has the number of active CSI-RS ports or the number of active CSI-RS resources greater than or equal to a number reported as the capability information. In a case of an aperiodic CSI-RS, CSI-RS (e.g., NZP CSI-RS) resources are active in a period from reception of a PDCCH including a CSI request (e.g., a final symbol) until transmission of a PUSCH to perform the CSI report (e.g., a final symbol) (see FIG. 4). In a case of a periodic CSI-RS, CSI-RS (e.g., NZP CSI-RS) resources are active in a period from a time at which the period CSI-RS is configured by higher layer signaling until a time at which the CSI-RS is released.

The UE reports parameters (e.g., FG2-36/2-40/2-41/2-43)/triplets related to one or more codebooks per band. For example, assume a case where the UE reports the following lists as the parameters/triplets ({maxNumberTxPortsPerResource, maxNumberResourcesPerBand, totalNumberTxPortsPerBand}) for band A and band B.
Band A: {16, 1, 16}, {8, 2, 12}
Band B: {16, 1, 16}, {8, 2, 12}

In this case, when the UE uses a combination of band A and band B, it is required that {16, 2, 32} and {8, 4, 24} are supported.

However, a case where only a common hardware with a specific budget (certain budget) is used for CSI calculation for all bands in 1 UE is also conceivable. In such a case, it is also conceivable that capability of the UE to actually support a case of the band combination is lower than that described above (e.g., {16, 1, 16}, {8, 2, 12}).

Typically, the parameters related to the codebook are reported per band, and thus CSI processing capability is not shared between bands supported by the UE. Thus, when the UE reports the parameters related to the codebook (e.g., maxNumberResourcesPerBand and totalNumberTxPortsPerBand) per band without considering a combination of bands, there is a possibility that CSI-RS resources/ports greater than or equal to those of UE capability are configured in a case of band combination.

As a method for avoiding such a case, it is conceivable that the UE reports (under-reports) a value lower than that of actual UE capability as a value reported per band. In other words, it is assumed that the UE conservatively determines (underestimates) values of the parameters/triplets related to the codebook reported per band by assuming a case of combination of multiple bands.

For example, it is conceivable that the UE under-reports the parameters (e.g., FG2-36/2-40/2-41/2-43)/triplets related to the codebooks for band A and band B, as described below.
Band A: {4, 1, 4}
Band B: {4, 1, 4}

When the UE performs the under-reporting, a reduced number of CSI-RS resources/number of CSI-RS ports scheduled from the network is configured also when one band is used (a single band mode is applied). Thus, when the UE applies the single band mode, CSI-RS resources/ports less than those of the UE capability are configured, and thus communication quality may deteriorate.

Therefore, it is conceivable that the UE reports a certain parameter related to the CSI processing capability with consideration of a band combination. For example, the UE reports the parameter (e.g., maxNumberSimultaneousNZP-CSI-RS-ActBWP-AllCC) corresponding to a maximum number of CSI-RS resources in all CCs/active BWP and the parameter (e.g., totalNumberPortsSimultaneousNZP-CSI-RS-ActBWP-AllCC) corresponding to a total number of ports for CSI-RS resources in all CCs/active BWP for each combination of bands (BC), as mentioned above.

For example, consider the certain parameter (e.g., FG2-33) related to the BC in a case where the parameters (e.g., FG2-36/2-40/2-41/2-43)/triplets related to the codebooks are reported for band A and band B, as described below.
Band A: {16, 1, 16}, {8, 2, 12}
Band B: {16, 1, 16}, {8, 2, 12}

### <Case 1>

Assume a case where the UE reports {2, 16} as a certain parameter {maxNumberSimultaneousNZP-CSI-RS-ActBWP-AllCC, totalNumberPortsSimultaneousNZP-CSI-RS-ActBWP-AllCC} related to a band combination (e.g., band A+B).

In such a case, the NW can configure 1 CSI-RS resource (or one 8-port CSI-RS resource) corresponding to 8 ports for band A and 1 CSI-RS resource corresponding to 8 ports for band B. However, the NW fails to configure two CSI-RS resources (or two CSI reports including 8-port CSI-RS resources) each corresponding to 8 ports per band.

This is because a maximum number of CSI-RS resources is limited to two in the BC. Also, when two CSI-RS resources are configured for only either band, a total number of ports is limited to 12, and thus the NW fails to configure two 8-port CSI-RSs for one band.

8 ports (band A) + 8 ports (band B) are configurable only in a case where reporting per band is interpreted as being per band. However, this case requires the UE to process a 16-port CSI-RS in 2 bands. The UE that shares a CSI processing unit between the bands has the same CSI processing capability for both intra-band and inter-band processing, and thus can process only up to 12 ports for a total of two CSI-RSs even in multiple bands if {x, 2, 12} is reported per band. This cause the UE to perform under-reporting, such as {x, 2, 6}, per band in order to prevent the 16 port-CSI-RS from being configured in 2 bands, as mentioned above.

### <Case 2>

Assume a case where the UE reports {1, 16} as the certain parameter related to the band combination (e.g., band A+B).

In such a case, the number of CSI-RS resources simultaneously configured in band A and band B is limited to one. Thus, when a periodic CSI-RS is configured in any band, the CSI report is not supported in another band. For supporting the CSI report in both bands, it is necessary that aperiodic CSI-RSs non-overlapping with each other in a time direction are configured in the both bands. Note, however, that also in this case, it is necessary to control so as not to simultaneously activate the aperiodic CSI-RSs in the two bands.

### <Case 3>

Assume a case where the UE reports {2, 12} as the certain parameter related to the band combination (e.g., band A+B).

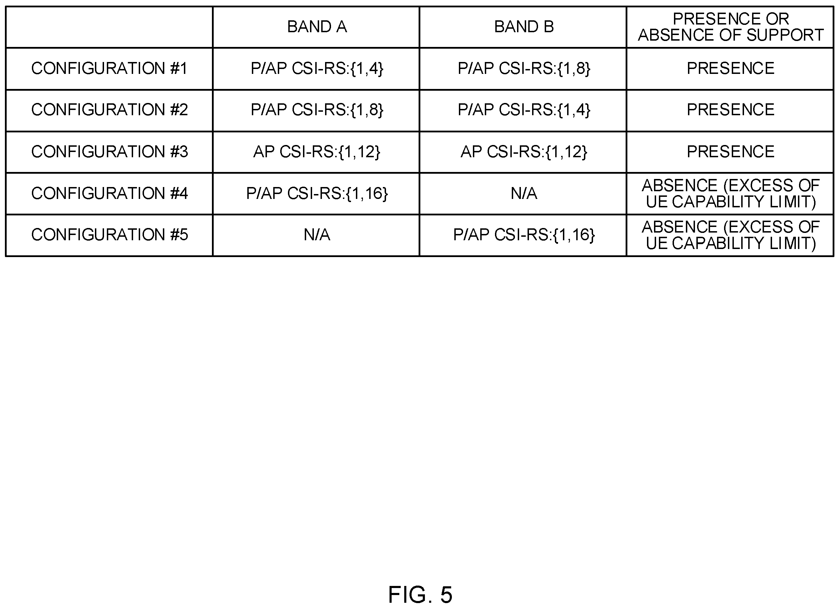

In such a case, it is possible that 1 CSI-RS resource is configured in each band, 4 ports are configured for one band, and 8 ports are configured for the other band (configuration 1 and configuration 2 of FIG. 5). It is possible that 1 CSI-RS resource corresponding to 12 ports is configured in each band by shifting the aperiodic CSI-RSs in the time direction (TDM) between band A and band B (configuration 3 of FIG. 5).

In case 3, a total number of ports in a case of BC is limited to 12. Thus, in one band (band A/B), 1 CSI-RS resource and 16 ports (CSI-RS resource with 16 ports) are not supported in inter-band CA even when only multiple CCs in a single band are active.

Thus, existing reporting methods report one certain parameter related to a band combination (report, for example, a certain parameter common to different CSI types). However, such reporting methods may fail to appropriately configure the number of CSI-RS resources/the number of CSI-RS ports configured per band.

In order to solve such an issue, it is conceivable that a plurality of parameters (or combinations of parameters) are reported as certain parameters (e.g., FG2-33) related to the band combination.

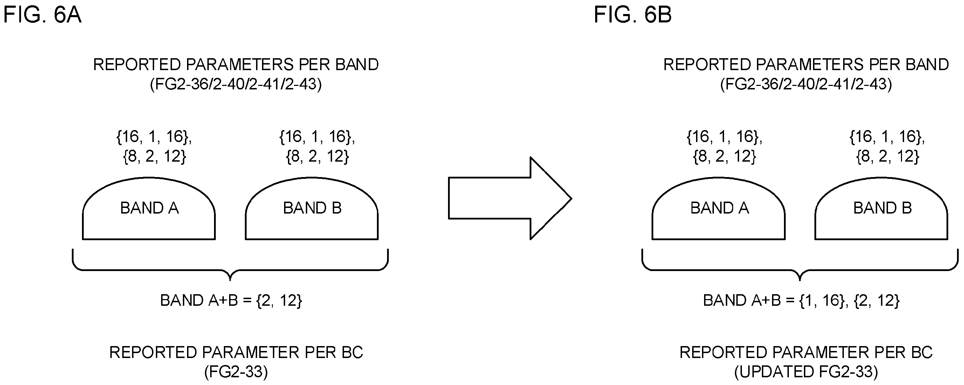

For example, it is conceivable that the UE reports, per BC/per CSI codebook type, one or more combinations of a maximum number of CSI-RS resources (e.g., maxNumberResourcesPerBC) and a total number of ports (e.g., totalNumberTxPortsPerBC) (see FIGS. 6A and 6B). The combination of the maximum number of CSI-RS resources and the total number of ports may be {maxNumberResourcesPerBC, totalNumberTxPortsPerBC} or {maxNumberSimultaneousNZP-CSI-RS-ActBWP-AllCC, totalNumberPortsSimultaneousNZP-CSI-RS-ActBWP-AllCC}.

FIG. 6A shows a reporting method of existing systems for reporting one certain parameter, and FIG. 6B shows a reporting method for reporting a plurality of certain parameters (also referred to as updated FG2-33 or enhanced FG2-33).

In FIG. 6B, the UE reports parameters (e.g., FG2-36/2-40/2-41/2-43)/triplets related to a codebook for band A and band B, as described below.
Band A: {16, 1, 16}, {8, 2, 12}
Band B: {16, 1, 16}, {8, 2, 12}

Furthermore, FIG. 6B shows a case where two certain parameters (e.g., updated FG2-33)/lists related to the BC are reported, as described below. Of course, the reported combinations are not limited to two, and may be three or more. Band A+B: {1, 16}, {2, 12}

Thus, the plurality of parameters (or combinations of parameters) are reported as the certain parameters (e.g., FG2-33) related to the BC, thereby allowing the number of resources and the number of ports per BC to be appropriately configured, and thus under-reporting by the UE can be suppressed.

On the other hand, even when a plurality of combinations of a maximum number of CSI-RS resources (e.g., maxNumberResourcesPerBC) and a total number of ports (e.g., totalNumberTxPortsPerBC) are reported per BC, a case where the number of resources/the number of ports exceeding UE capability is configured may occur.

For example, assume a case where the UE reports the following lists as the parameters/triplets ({maxNumberTxPortsPerResource, maxNumberResourcesPerBand, totalNumberTxPortsPerBand}) for band A and band B.
Band A: {8, 6, 48}, {16, 2, 32}
Band B: {8, 6, 48}, {16, 2, 32}

Assume a case where the UE reports the following values as certain parameters (e.g., updated FG2-33)/lists ({maxNumberResourcesPerBC, totalNumberTxPortsPerBC}) related to the BC.
Band A+B: {6, 48}, {2, 32}

However, when reports for the BC (here, band A+B) are {6, 48}, {2, 32}, it is conceivable that there is a possibility that the following structure (a total of 48 ports for 3 resources) is configured.
Band A: 16 ports + 16 ports (2 resources)
Band B: 16 ports (1 resource)

This is because {16, 2, 32} is satisfied for band A, {16, 2, 32} is satisfied for band B, and {6, 48} is satisfied for band A+B (FG2-33) (in other words, 3 resources are configured simultaneously and a total number of ports is 48 or less in band A+B). However, such a structure may exceed UE capability.

Thus, it is conceivable that the UE also reports, for the BC (or per BC), a maximum number of ports per resource (e.g., maxNumberTxPortsPerResource or maxNumberTxPortsPerResourceperBC). However, when a maximum number of ports per resource (e.g., maxNumberTxPortsPerResource), a maximum number of CSI-RS resources (e.g., maxNumberResourcesPerBC), and a total number of ports (e.g., totalNumberTxPortsPerBC) are also reported for the BC (or per BC), overhead of reporting signaling may increase.

### (UE Capability Enquiry for CSI Report)

In order to reduce overhead of reporting of UE capability information related to CSI, it is conceivable that UE capability enquiry (e.g., UECapabilityEnquiry) (or UE-capabilityRequestFilter, CodebookParameterFilter) is notified from the network to the UE. The UE may limit a value of a reported CSI parameter (or CSI codebook parameter) on the basis of notification from the network.

For example, the UE may limit, on the basis of information (e.g., UECapabilityEnquiry) from the network, a combination of parameters (e.g., a triplet) reported per band or a combination of parameters reported per BC.

For example, the network may notify at least some values (e.g., the number of transmission ports, the number of resources, or the like) of the CSI codebook parameter as the UE capability enquiry, and the UE may control so as not to report UE capability information exceeding the notified value. For example, when the network supports only up to X ports, reporting of UE capability information related to the number of transmission ports exceeding X is unnecessary for the network, and thus limiting a value reported from the UE can suppress overhead of the reporting.

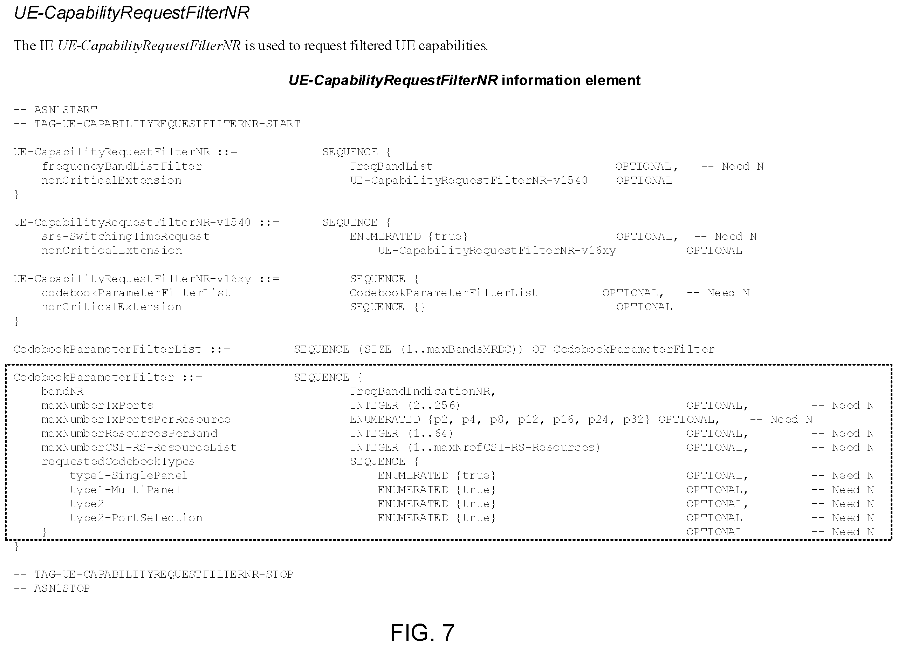

The network may include information related to a codebook parameter (e.g., CodebookParameterFilter) in the UE capability enquiry to notify the UE of the information (see FIG. 7). CodebookParameterFilter may include at least one of information related to a maximum number of transmission ports (e.g., maxNumberTxPorts), information related to a maximum number of transmission ports per resource (e.g., maxNumberTxPortsPerResource), and information related to a maximum number of resources per band (e.g., maxNumberResourcePerBand).

CodebookParameterFilter may include information related to a maximum number of CSI-RS resource lists (e.g., maxNumberCSI-RS-ResourceList) and information related to requested codebook types (e.g., requestedCodebookTypes).

The information related to a maximum number of transmission ports (e.g., maxNumberTxPorts) may be a filter to limit a value of a total number of transmission ports per band (e.g., totalNumberTxPortsPerBand) included in the codebook parameter reported by the UE (see FIG. 7).

The information related to a maximum number of transmission ports per resource (e.g., maxNumberTxPortsPerResource) may be a filter to limit a value of a maximum number of transmission ports per resource (e.g., maxNumberTxPortsPerResource) included in the codebook parameter reported by the UE (see FIG. 7).

The information related to a maximum number of resources per band (e.g., maxNumberResourcePerBand) may be a filter to limit a value of a maximum number of resources per band (maxNumberResourcePerBand) included in the codebook parameter reported by the UE (see FIG. 7).

The information related to a maximum number of CSI-RS resource lists (e.g., maxNumberCSI-RS-ResourceList) may be a filter to limit the number of entries of a supported CSI-RS resource list (e.g., supportedCSI-RS-ResourceList) included in the codebook parameter reported by the UE (see FIG. 7).

The information related to requested codebook types (e.g., requestedCodebookTypes) may be a filter to limit a type included in the codebook parameter reported by the UE (see FIG. 7).

When receiving UE capability enquiry including CodebookParameterFilter, the UE may control so as to report a value less than a value indicated by CodebookParameterFilter in the codebook parameter reported by the UE.

For example, when CodebookParameterFilter includes information related to a maximum number of transmission ports (e.g., maxNumberTxPorts), the UE includes, in the codebook parameter, SupportedCSI-RS-Resource with totalNumberTxPortsPerBand less than a value notified by CodebookParameterFilter (e.g., maxNumberTxPorts) to report.

When CodebookParameterFilter includes information related to a maximum number of transmission ports per resource (e.g., maxNumberTxPortsPerResource), the UE includes, in the codebook parameter, SupportedCSI-RS-Resource with maxNumberTxPortsPerResource less than a value notified by CodebookParameterFilter (e.g., maxNumberTxPortsPerResource) to report.

When CodebookParameterFilter includes information related to a maximum number of resources per band (e.g., maxNumberResourcePerBand), the UE includes, in the codebook parameter, SupportedCSI-RS-Resource with maxNumberResourcePerBand less than a value notified by CodebookParameterFilter (e.g., maxNumberResourcePerBand) to report.

Thus, an assumed value of the network (e.g., a maximum value of the UE capability information) may be notified to the UE for each parameter (e.g., maxNumberTxPorts, maxNumberTxPortsPerResource, maxNumberResourcePerBand), and the UE may control reporting so as not to exceed the notified value. Therefore, overhead of reporting by the UE can be reduced.

On the other hand, reported values (e.g., reported values for each CSI type) included in the codebook parameter reported by the UE per band are constituted by at least one triplet. For example, the UE may report the following triplets for band A. Note that the following values are an example, and are not limited to this. Band A: {16, 1, 16}, {8, 2, 12}

In other words, the UE reports respective parameters for band A as follows.

### <Triplet #1>

```
 maxNumberTxPortsPerResource = 16
 maxNumberResourcePerBand = 1
 totalNumberTxPortsPerBand = 16
```

### <Triplet #2>

```
 maxNumberTxPortsPerResource = 8
 maxNumberResourcePerBand = 2
 totalNumberTxPortsPerBand = 12
```

Here, assume a case where the following values are notified as the UE capability enquiry (e.g., UECapabilityEnquiry) or CodebookParameterFilter from the network.

```
 maxNumberTxPortsPerResource = 10
 maxNumberResourcePerBand = 2
 maxNumberTxPorts (or totalNumberTxPortsPerBand) = 16
```

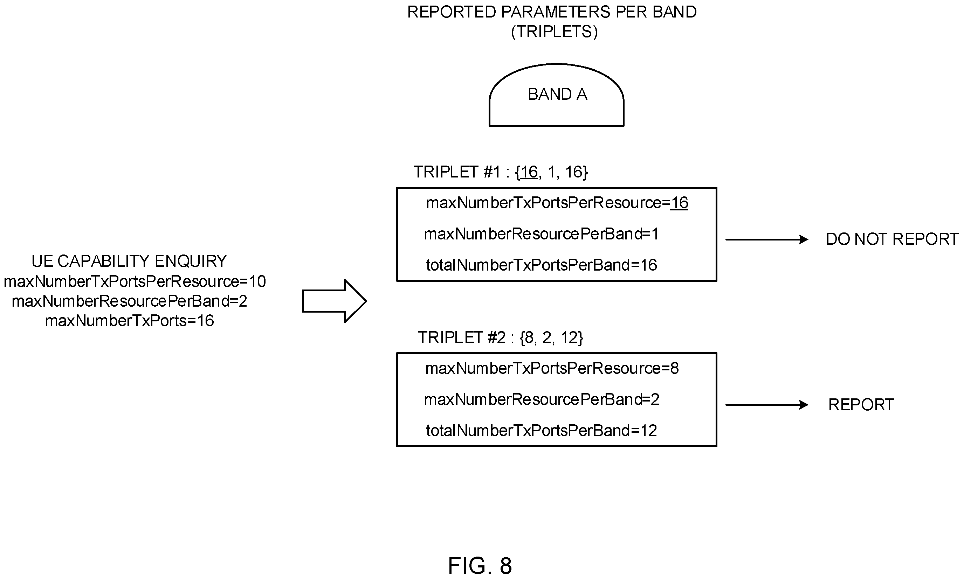

In such a case, a maximum number of transmission ports per resource (maxNumberTxPortsPerResource) in triplet #1 is greater than a value notified from the network. Limiting the reporting on the basis of the UE capability enquiry results in a case that triplet #1 {16, 1, 16} is not reported and only triplet #2 {8, 2, 12} is reported (see FIG. 8).

However, from the point of view of the network, when triplet #1 {16, 1, 16} is reported from the UE, it can be judged that a capability limit {10, 1, 16} of the network can be maximally configured for the UE, and thus the inventors of the present invention focused on a case that reporting of triplet #1 is useful for the network.

Thus, the inventors of the present invention studied contents/values reported on the basis of the UE capability enquiry (e.g., UECapabilityEnquiry) or CodebookParameterFilter notified from the network when reporting is performed with a plurality of combined parameters, and came up with the idea of the present embodiments.

Embodiments according to the present disclosure will be described in detail with reference to the drawings as follows. The radio communication methods and respective aspects according to respective embodiments may each be employed individually, or may be employed in combination. Note that in the present disclosure, "A/B" may be interpreted as "at least one of A and B."

In descriptions below, a port, a CSI-RS port, and a CSI-RS resource port may be interchangeably interpreted. Also, "per band combination (BC)" may be "per CSI codebook type" in addition to "per BC."

In descriptions below, a maximum number of CSI-RS resources (e.g., maxNumberResourcesPerBC) and a maximum number of CSI-RS resources in all CCs/active BWP (e.g., maxNumberSimultaneousNZP-CSI-RS-ActBWP-AllCC) may be interchangeably interpreted. A total number of ports (e.g., totalNumberTxPortsPerBC) and a total number of ports for CSI-RS resources in all CCs/active BWP (e.g., totalNumberPortsSimultaneousNZP-CSI-RS-ActBWP-AllCC) may be interchangeably interpreted.

In descriptions below, UE capability enquiry (e.g., UECapabilityEnquiry) may be interpreted as a UE capability RAT request list (e.g., UE-CapabilityRAT-RequestList), a UE capability RAT request (e.g., UE-CapabilityRAT-Request), capabilityRequestFilter, UE-CapabilityRequestFilterNR, or CodebookParameterFilter.

### (First Aspect)

In a first aspect, a case will be described where, in a case of reporting a combination of a plurality of parameters, reporting of the combination is not performed or the reporting is not requested when all elements of the combination are greater than values notified from a network.

Description is given below by using, as an example of a combination/list of a plurality of parameters reported by a UE, a combination (e.g., triplet) of a maximum number of transmission ports per resource (e.g., maxNumberTxPortsPerResource), a maximum number of resources per band (e.g., maxNumberResourcePerBand), and a total number of transmission ports per band (e.g., totalNumberTxPortsPerBand), but the combination/list is not limited to this. A case where a combination of two parameters out of these three parameters is reported may be assumed.

Description is given below by using, as an example, UE capability reported per band, but may also be applied to UE capability reported per BC/per CSI type.

When reporting a combination of a plurality of parameters (maxNumberTxPortsPerResource, maxNumberResourcePerBand, totalNumberTxPortsPerBand), the UE may control so as to report the combination when at least one of respective parameters (or respective elements) of the combination is less than a certain value notified from the network (or is the certain value or less). The UE may control so as to report the combination when a parameter without notification of the certain value from the network is present.

The certain value notified from the network may be notified by UE capability enquiry (e.g., UECapabilityEnquiry). The certain value notified from the network may include at least one of a value related to a maximum number of transmission ports (e.g., maxNumberTxPorts), a value related to a maximum number of transmission ports per resource (e.g., maxNumberTxPortsPerResource), and a value related to a maximum number of resources per band (e.g., maxNumberResourcePerBand).

For example, assume a case where the UE tries to report the following triplets for band A. Note that the following values are an example, and are not limited to this.
Band A: {16, 1, 16}, {8, 2, 12}

In other words, the UE reports respective parameters for band A as follows.

### <Triplet #1>

```
 maxNumberTxPortsPerResource = 16
 maxNumberResourcePerBand = 1
 totalNumberTxPortsPerBand = 16
```

### <Triplet #2>

```
 maxNumberTxPortsPerResource = 8
 maxNumberResourcePerBand = 2
 totalNumberTxPortsPerBand = 12
```

Here, assume a case where the following values are notified as the UE capability enquiry (e.g., UECapabilityEnquiry) or CodebookParameterFilter from the network.

```
 maxNumberTxPortsPerResource = 10
 maxNumberResourcePerBand = 2
 maxNumberTxPorts (or totalNumberTxPortsPerBand) = 16
```

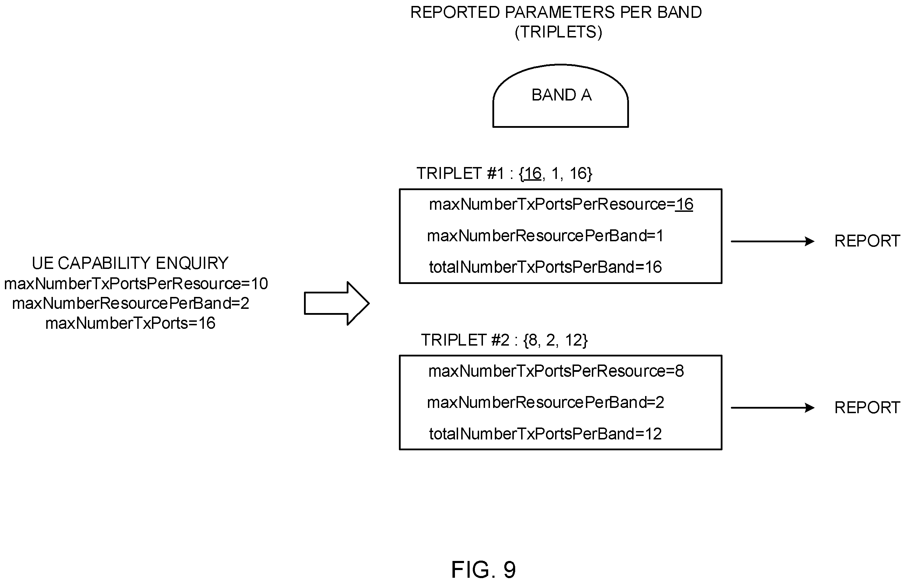

In such a case, a maximum number of transmission ports per resource (maxNumberTxPortsPerResource) in triplet #1 is greater than a value notified from the network. On the other hand, values of other parameters (maxNumberResourcePerBand, totalNumberTxPortsPerBand) in triplet #1 are less than or equal to the value notified from the network (do not exceed the value). Thus, the UE may be allowed to report both triplet #1 {16, 1, 16} and triplet #2 {8, 2, 12} (see FIG. 9).

Therefore, from the point of view of the network, values of some parameters included in a combination reported from the UE can be used (or configured for the UE), and thus reporting the combination to the network can improve communication quality.

Note that when reporting triplet #1 in FIG. 9, the UE may perform the reporting by modifying values of some parameters (e.g., parameter exceeding a value notified from the network). For example, the UE may perform the reporting by modifying maxNumberTxPortsPerResource in triplet #1 to the value notified from the network (here, {10, 1, 16}).

When reporting a combination of a plurality of parameters (maxNumberTxPortsPerResource, maxNumberResourcePerBand, totalNumberTxPortsPerBand), the UE may employ at least one of UE operation 1 to UE operation 4 below when all parameters (or all elements) of the combination are greater than values notified from the network. When a parameter without notification of the certain value from the network is present, the parameter may be removed from all elements.

### <UE Operation 1>

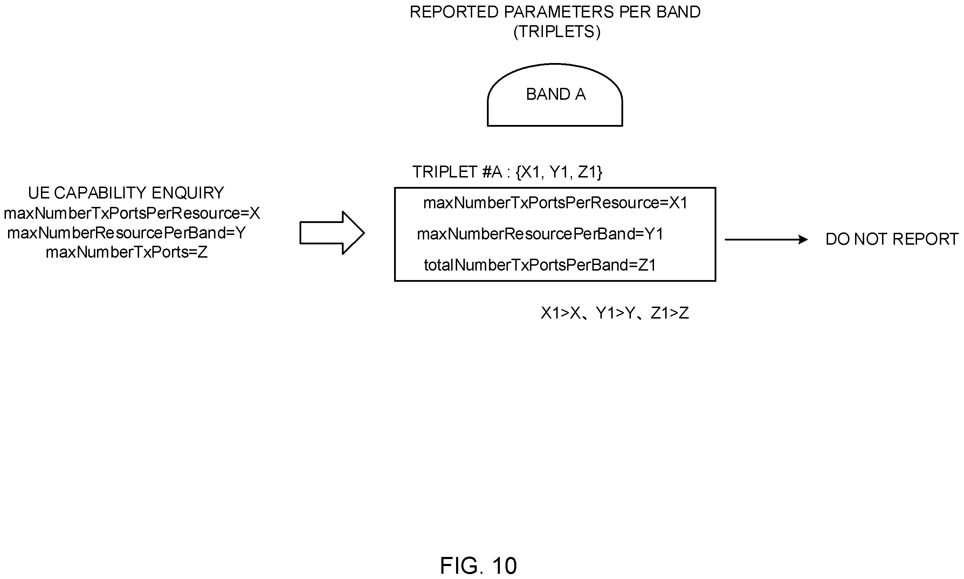

When values (e.g., X₁, Y₁, Z₁) of all parameters included in a combination (e.g., triplet #A) scheduled to be reported are greater than values (e.g., X, Y, Z) notified from the network (for example, X₁ > X, Y₁ > Y, Z₁ > Z), the UE may control so as not to report the combination (see FIG. 10). In this case, from the point of view of the network, the values of all parameters included in the combination scheduled to be reported are not available. Therefore, controlling so as not to perform reporting of the combination can suppress an increase in overhead of reporting by the UE.

### <UE Operation 2>

When values of all parameters included in a combination (e.g., a triplet) scheduled to be reported are greater than values notified from the network, the UE may not be requested (or may not be expected) to report the combination. In this case, reporting of the combination may be allowed depending on UE implementation.

### <UE Operation 3>

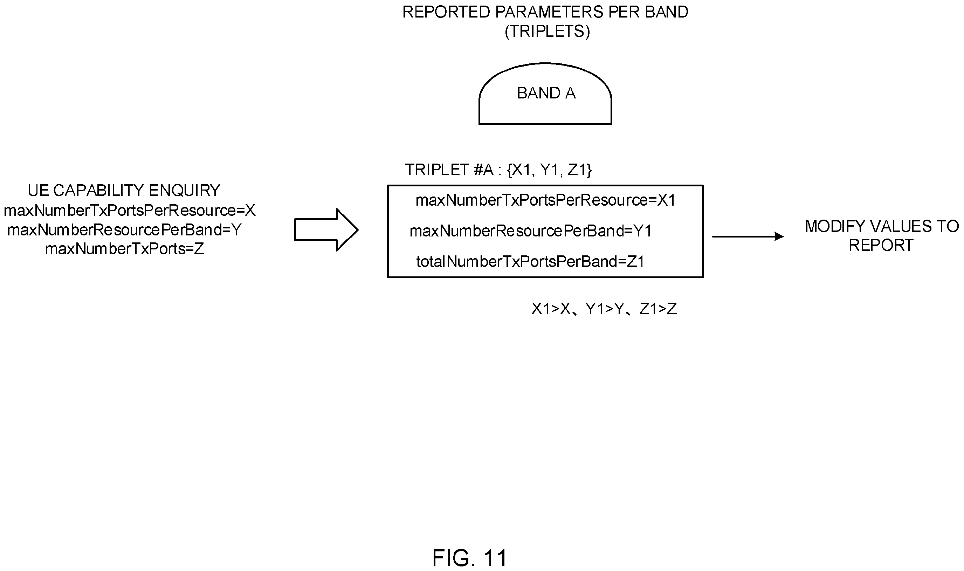

When values (e.g., X₁, Y₁, Z₁) of all parameters included in a combination (e.g., triplet #A) scheduled to be reported are greater than values (e.g., X, Y, Z) notified from the network (for example, X₁ > X, Y₁ > Y, Z₁ > Z), the UE may modify values of respective parameters included in the combination to report (see FIG. 11). For example, the UE may modify the values of respective parameters included in the combination to values not exceeding the values notified from the network. The UE may modify values of all parameters included in the combination, or may modify only values of some parameters.

Therefore, the network can configure the number of resources/the number of transmission ports by using values of parameters included in a combination reported from the UE.

### <UE Operation 4>

In a case where values of all parameters included in a combination (e.g., a triplet) scheduled to be reported are greater than values notified from the network, the UE may not perform reporting of the combination, and may report the case (that all parameters included in the combination exceed the values notified from the network) to the network. In this case, it is only necessary that the UE performs notification to the network by using fewer bits (e.g., 1 bit), and thus an increase in overhead of reporting by the UE can be suppressed.

### (Second Aspect)

In a second aspect, a condition for application of the UE operation (at least one of UE operation 1 to UE operation 4) in the first aspect will be described.

In Rel. 15, since a triplet is reported per band, there is a case where a UE under-reports reported values of the triplet. Thus, in Rel. 16 (or later versions), it is assumed that the UE reports a plurality of triplets in each of reporting for each band (per band) and reporting for each band combination (per BC).

In other words, it is assumed that the UE reports at least one of report contents #A to report contents #C below (described hereinafter as report #A to report #C).
Report #A: triplet (per band) corresponding to Rel. 15
Report #B: new triplet (per band) corresponding to Rel. 16 (or later versions)
Report #C: new triplet (per BC) corresponding to Rel. 16 (or later versions)

A base station corresponding to Rel. 15 recognizes only report #A. A base station corresponding to Rel. 16 may recognize only report #A to assume an under-reported value, or may assume reported values of report #B and report #C, and may assume a value greater than that of report #A.

The UE operation in the first aspect may be applied to report #B and report #C, and may not be applied to report #A. Therefore, when a configuration that includes a value of a parameter related to a triplet in UE capability enquiry (e.g., UECapabilityEnquiry) is supported from Rel. 16, the UE operation in the first aspect can be applied without having an impact on an operation of Rel. 15.

Alternatively, the UE operation in the first aspect may be applied to all of report #A, report #B, and report #C.

### (Variation 1)

The presence or absence of reporting of at least one of report #A to report #C may be indicated/configured for the UE from a network. For example, the network may indicate/configure the presence or absence of reporting of at least one of report #A to report #C for the UE by using UE capability enquiry (e.g., UECapabilityEnquiry).

The UE (e.g., UE to support Rel. 16) for which the presence or absence of reporting related to report #A to report #C is not indicated/configured from the network (by, for example, the UE capability enquiry) may report each of report #A, report #B, and report #C.

On the other hand, the UE (e.g., UE to support Rel. 16) that has been notified from the network (by, for example, the UE capability enquiry) that reporting of report #B and report #C is unnecessary may control so as not to perform the reporting of report #B and report #C. Therefore, an increase in overhead of reporting by the UE can be suppressed. Alternatively, the UE may not be requested/expected to report report #B and report #C. In this case, the UE may report report #B/report #C depending on the UE.

Alternatively, the UE (e.g., UE to support Rel. 16) for which the presence or absence of reporting related to report #A to report #C is not indicated/configured from the network (by, for example, the UE capability enquiry) may control so as to report only report #A. In the network for which reporting of only report #A is enough (network in which under-reporting is not a major issue), performing such control can suppress an increase in overhead of reporting by the UE. Consequently, a resource size of a PUSCH used for transmission of UE capability can be reduced, and thus resource usage efficiency can be improved. Note that the network in which under-reporting is not a major issue may be, for example, a network with a fewer number of configurable transmission ports/number of configurable resources (e.g., a certain value or less).

On the other hand, the UE (e.g., UE to support Rel. 16) that has been requested to report report #B and report #C from the network (by, for example, the UE capability enquiry) may control so as to perform reporting of report #B and report #C in addition to report #A. Alternatively, the UE may control so as not to report report #B/report #C depending on the UE.

### (Variation 2)

Reporting of an additional triplet for a type 2 CSI codebook (e.g., Rel. 16-type 2 CSI codebook) is also conceivable. Type 2 CSI may be used for selection of multiple beams.

In this case, the first aspect/variation 1 may be employed in the type 2 CSI codebook. The presence or absence of the necessity of reporting a triplet for the type 2 CSI codebook may be indicated/configured for the UE from the network (by, for example, the UE capability enquiry), and the UE may control reporting of the triplet on the basis of the indication/configuration from the network.

The UE that has been notified that reporting of a triplet for the type 2 CSI codebook is unnecessary (or for which the reporting is not indicated/configured) may not perform reporting of the triplet, and may report the presence or absence of support for the type 2 CSI codebook (e.g., reporting with 1 bit).

The UE that reports the fact that the type 2 CSI codebook is supported and that does not perform reporting of the triplet may support a certain triplet. The certain triplet may be defined by specifications, or may be determined on the basis of reported values of another CSI codebook.

For example, the certain triplet may be selected from one or more triplets included in a list of triplets corresponding to a type 1 CSI codebook (Rel. 15 or Rel. 16). For example, the first triplet or the last triplet included in the list may be selected as the certain triplet. Alternatively, a triplet with at least one parameter (or element) being a minimum value may be selected as the certain triplet.

A triplet corresponding to the type 2 CSI codebook may include more parameters (or elements) as compared to a triplet corresponding to another CSI codebook (e.g., the type 1 CSI codebook). For example, the triplet corresponding to the type 2 CSI codebook may include 4 parameters (or 4 elements).

For example, the triplet corresponding to the type 2 CSI codebook may have a structure to which R (R = 1 or 2) is added in addition to 3 parameters/elements (maxNumberTxPortsPerResource, maxNumberResourcePerBand, totalNumberTxPortsPerBand). R may be a value indicating a relation between a size/number of PMI subbands and a size/number of CQI subbands. When R = 1, R may indicate a case where the size/number of PMI subbands and the size/number of CQI subbands are equal to each other. When R = 2, R may indicate a relation of the ratio of the size/number of PMI subbands to the size/number of CQI subbands being 1:2 (a case where a size of one subband is half of a size of the other subband).

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

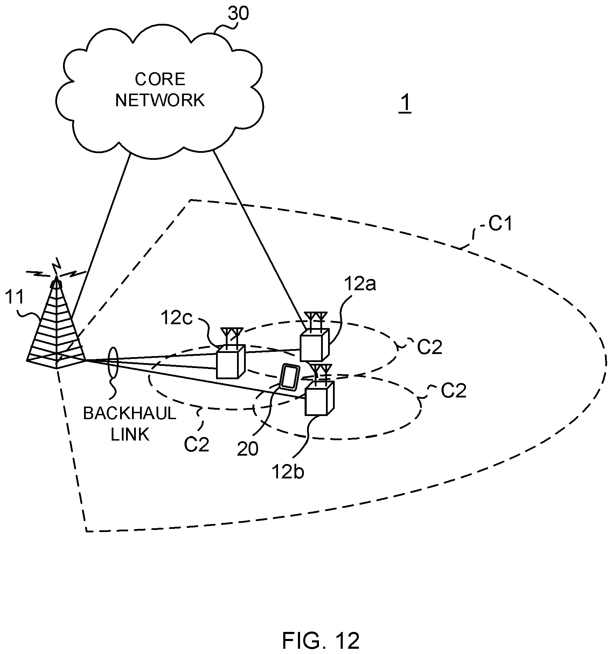

FIG. 12 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface, and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

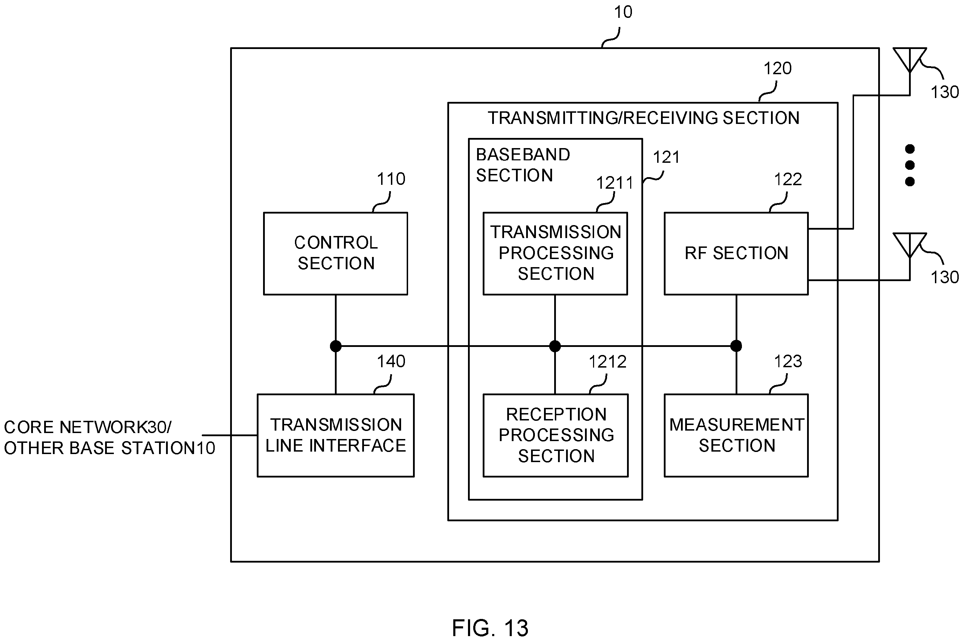

FIG. 13 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit terminal capability enquiry information including at least one of information related to a maximum number of transmission ports per resource, information related to a maximum number of resources, and information related to a total number of transmission ports.

When a combination of the maximum number of transmission ports per resource, the maximum number of resources, and the total number of transmission ports is reported as terminal capability from a terminal, the control section 110 may assume that at least one of the maximum number of transmission ports per resource, the maximum number of resources, and the total number of transmission ports is less than a value notified by the enquiry information.

### (User Terminal)

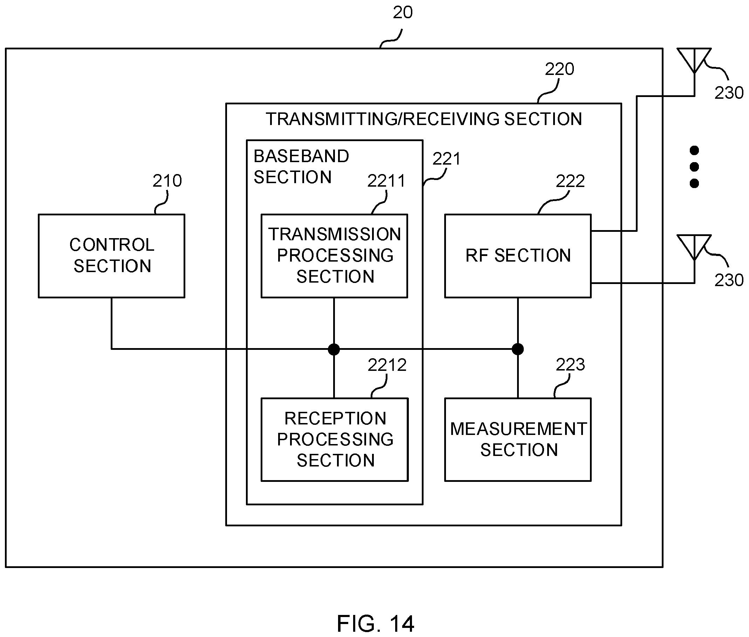

FIG. 14 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive terminal capability enquiry information including at least one of information related to a first parameter (e.g., a maximum number of transmission ports per resource), information related to a second parameter (e.g., a maximum number of resources), and information related to a third parameter (e.g., a total number of transmission ports).

When reporting a combination of the first parameter (e.g., the maximum number of transmission ports per resource), the second parameter (e.g., the maximum number of resources), and the third parameter (e.g., the total number of transmission ports) as terminal capability, the control section 210 may control to perform reporting of the combination in a case that at least one of the maximum number of transmission ports per resource, the maximum number of resources, and the total number of transmission ports is less than a value notified by the enquiry information.

When all of the maximum number of transmission ports per resource, the maximum number of resources, and the total number of transmission ports in the combination are greater than values notified by the enquiry information, the control section 210 may control not to perform the reporting of the combination.

When all of the maximum number of transmission ports per resource, the maximum number of resources, and the total number of transmission ports in the combination are greater than values notified by the enquiry information, the control section 210 may control to change at least one of the maximum number of transmission ports per resource, the maximum number of resources, and the total number of transmission ports to report.

When all of the maximum number of transmission ports per resource, the maximum number of resources, and the total number of transmission ports in the combination are greater than values notified by the enquiry information, the control section 210 may control to report the case.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

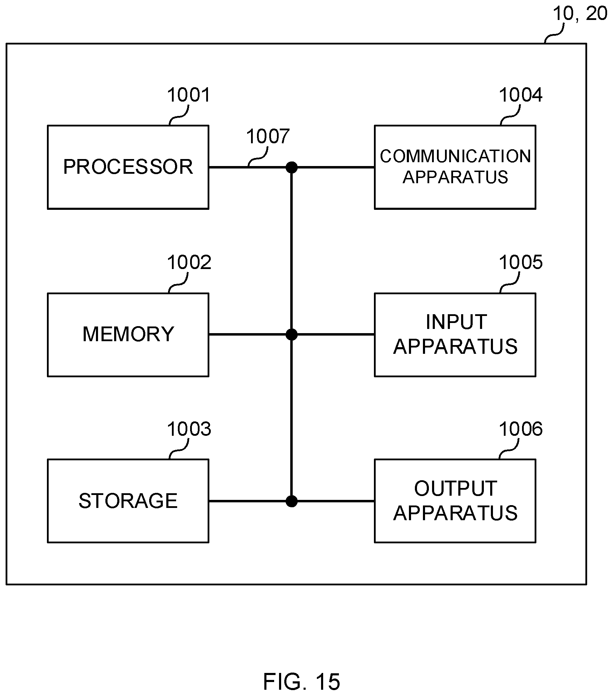

For example, a base station, a user terminal, and so on according to one embodiment of the present disclosure may function as a computer that executes the processes of the radio communication method of the present disclosure. FIG. 15 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs) .

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

This application is based on Japanese Patent Application No. 2020-080376 filed on Apr. 30, 2020. The entire contents of the application are herein incorporated.

## Claims

1. A terminal comprising:
a receiving section that receives terminal capability enquiry information including at least one of information related to a maximum number of transmission ports per resource, information related to a maximum number of resources, and information related to a total number of transmission ports; and
a control section that, when reporting a combination of the maximum number of transmission ports per resource, the maximum number of resources, and the total number of transmission ports as terminal capability, controls to perform reporting of the combination in a case that at least one of the maximum number of transmission ports per resource, the maximum number of resources, and the total number of transmission ports is less than a value notified by the enquiry information.

2. The terminal according to claim 1, wherein
when all of the maximum number of transmission ports per resource, the maximum number of resources, and the total number of transmission ports in the combination are greater than values notified by the enquiry information, the control section controls not to perform the reporting of the combination.

3. The terminal according to claim 1, wherein
when all of the maximum number of transmission ports per resource, the maximum number of resources, and the total number of transmission ports in the combination are greater than values notified by the enquiry information, the control section controls to change at least one of the maximum number of transmission ports per resource, the maximum number of resources, and the total number of transmission ports to report.

4. The terminal according to claim 1, wherein
when all of the maximum number of transmission ports per resource, the maximum number of resources, and the total number of transmission ports in the combination are greater than values notified by the enquiry information, the control section controls to report the case.

5. A radio communication method comprising:
receiving terminal capability enquiry information including at least one of information related to a maximum number of transmission ports per resource, information related to a maximum number of resources, and information related to a total number of transmission ports; and
controlling, when reporting a combination of the maximum number of transmission ports per resource, the maximum number of resources, and the total number of transmission ports as terminal capability, to perform reporting of the combination in a case that at least one of the maximum number of transmission ports per resource, the maximum number of resources, and the total number of transmission ports is less than a value notified by the enquiry information.

6. A base station comprising:
a transmitting section that transmits terminal capability enquiry information including at least one of information related to a maximum number of transmission ports per resource, information related to a maximum number of resources, and information related to a total number of transmission ports; and
a control section that, when a combination of the maximum number of transmission ports per resource, the maximum number of resources, and the total number of transmission ports is reported as terminal capability from a terminal, assumes that at least one of the maximum number of transmission ports per resource, the maximum number of resources, and the total number of transmission ports is less than a value notified by the enquiry information.
